# EUROPÄISCHE PATENTANMELDUNG

(11) **EP 2 993 380 A1**
(43) Veröffentlichungstag der Anmeldung: **09.03.2016**
(21) Anmeldenummer: 14183391.3
(22) Anmeldetag: 03.09.2014
(51) Int. Cl.: F16K 1/22, F01D 17/14, F16K 17/168, F16K 1/52

(54) **Ventil für eine Dampfturbine**

(71) Anmelder: Siemens Aktiengesellschaft, 80333 München (DE)
(72) Erfinder: Gloss, Daniel, 45481 Mülheim an der Ruhr (DE); Hecker, Simon, 45657 Recklinghausen (DE); Musch, Christian, 45259 Essen (DE); Rothe, Klaus, 46459 Rees (DE)

(57) **Zusammenfassung**

Die Erfindung betrifft ein Ventil für eine Dampfkraftanlage, wobei das Ventil eine Klappe (1) umfasst, in die eine zweite Vorklappe (6) integriert ist, so dass bei einer geschlossenen Stellung der Klappe (1) die Vorklappe (6) relativ zur Klappe (1) bewegt werden kann, so dass ein Dampf in einer geringeren Menge durch das Ventil strömen kann.

## Beschreibung

Die Erfindung betrifft eine Armatur umfassend eine Klappe, die drehbar um eine Achse angeordnet ist sowie ein Armarturgehäuse, in dem die Klappe angeordnet ist.

Armaturen werden in Dampfturbinenanlagen eingesetzt. Eine Dampfturbinenanlage umfasst eine Dampfturbine, die in der Regel in mehrere Teilturbinen eingeteilt wird. So wird eine Dampfturbine in eine Hochdruck-Teilturbine, eine MitteldruckTeilturbine und eine Niederdruck-Teilturbine angeordnet. Im Regelbetrieb strömt ein Frischdampf durch die Hochdruck-Teilturbine und von dort zu einem Zwischenüberhitzer und anschließend zu einer Mitteldruck-Teilturbine. Nach Durchströmung durch die Mitteldruck-Teilturbine strömt der Dampf zu einer Niederdruck-Teilturbine. Die thermische Energie des Dampfes wird in Rotationsenergie des Rotors umgewandelt.

Es ist bekannt, Dampfturbinen derart auszubilden, dass zwischen der Mitteldruck-Teilturbine und der Niederdruck-Teilturbine eine Kupplung angeordnet ist, die dazu ausgebildet ist, die Niederdruck-Teilturbine vom restlichen Wellenstrang zu lösen. Diese Variante ist für Dampfkraftanlagen vorgesehen, bei denen eine große Dampfentnahmemenge geplant ist. Das Lösen der Kupplung ist dazu vorgesehen, um eine Ventilation der Niederdruck-Teilturbine bei zu kleinen verbleibenden Massenströmen in der Niederdruck-Teilturbine zu verhindern. Die Niederdruck-Teilturbine muss zu einem späteren Zeitpunkt wieder drehmomentübertragend mit dem restlichen Wellenstrang eingekuppelt werden, um wieder angewärmt zu werden.

Derzeit lassen sich die dafür benötigten Massenströme aufgrund der Größe der in der Überstromleitung vorhandenen Drosselklappen nicht oder zumindest zu ungenau regeln. Des Weiteren sind die Kräfte zum Öffnen der Drosselklappen recht groß, da die Drosselklappen eine große Masse aufweisen, daher werden entsprechend große Antriebe benötigt.

Es ist Aufgabe der Erfindung eine verbesserte Armatur anzugeben.

Gelöst wird diese Aufgabe durch eine Armatur umfassend eine Klappe, die drehbar um eine Achse angeordnet ist, ein Armaturgehäuse, in dem die Klappe angeordnet ist, wobei die Klappe eine Vorklappe aufweist, die relativ zur Klappe bewegbar ausgebildet ist.

Mit der Erfindung wird somit der Weg eingeschlagen, die Klappe einer Armatur derart weiterzubilden, dass in der Klappe eine Vorklappe angeordnet ist, die separat zur Klappe bewegt werden kann. Die Vorklappe kann relativ zur Klappe bewegbar ausgebildet sein. Die Vorklappe wird hierbei in der Klappe integriert und ist daher kleiner ausgeführt als die Klappe. Somit kann folgendes Szenario stattfinden: Bei geschlossener Klappe kann die Vorklappe relativ gegenüber der Klappe geöffnet werden, so dass ein Dampfmassenstrom durch die Armatur strömt.

Vorteilhafte Weiterbildungen sind in den Unteransprüchen angegeben.

So wird in einer ersten vorteilhaften Weiterbildung die Klappe im Wesentlichen kreisförmig ausgebildet. Dies ist aus fertigungstechnischer Sicht eine sehr kostengünstige Variante. Darüber hinaus ist eine Abdichtung einer im Wesentlichen kreisförmigen Klappe in einem entsprechenden kreisförmigen Rohr bzw. Ventilgehäuse eine optimale Lösung.

In einer weiteren vorteilhaften Weiterbildung ist die Vorklappe um eine zweite Achse drehbar angeordnet, wobei die zweite Achse mittig durch die Vorklappe verläuft. Somit wird vorgeschlagen, die Vorklappe, die in einer weiteren vorteilhaften Ausführungsform ebenso kreisförmig ausgebildet ist, um die zweite Achse drehbar auszubilden, so dass die für diesen Antrieb benötigten Kräfte möglichst gering sind, da das Trägheitsmoment einer Scheibe entsprechend gering ist.

In einer vorteilhaften Weiterbildung fällt die Achse mit der zweiten Achse zusammen. Aus Symmetriegründen kann somit die Strömung, die durch die Armatur strömt, optimiert werden.

In einer weiteren vorteilhaften Weiterbildung umfasst die Vorklappe drei Teilklappen, die miteinander drehbar angeordnet sind. Dabei werden die drei Teilklappen synchron miteinander bewegt. Somit ist im Grunde lediglich ein Antrieb möglich, um die Strömung durch die Vorklappe zu steuern. Die drei Teilklappen können entweder um die zweite Achse drehbar oder in einer translatorischen Richtung zur zweiten Achse bewegt werden.

In einer vorteilhaften Weiterbildung ist die Vorklappe innerhalb eines Rohres in der Klappe angeordnet. Dies ist eine aus fertigungstechnischer Sicht einfache und kostengünstige Lösung.

In einer weiteren vorteilhaften Weiterbildung ist das Armaturgehäuse im Wesentlichen kreisförmig ausgebildet. Dies ist eine fertigungstechnisch einfache Lösung und führt zu einer Kostenersparnis.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zu Erläuterungen dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine perspektivische Ansicht einer Klappe,
- Figur 2: eine perspektivische Ansicht einer alternativen Ausführungsform einer Klappe im leicht angedrosselten Zustand,
- Figur 3: die Ventilklappe gemäß Figur 2 in geschlossenem Zustand.

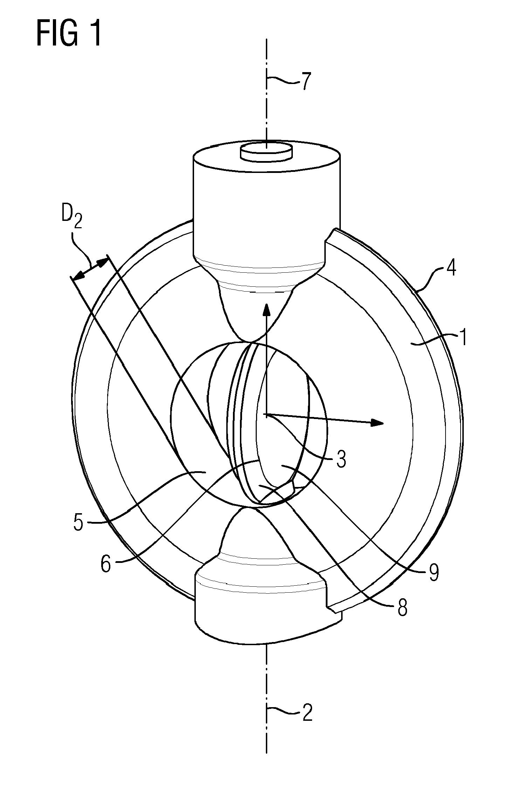

Die Figur 1 zeigt eine perspektivische Ansicht einer Armatur, wobei lediglich die Klappe 1 dargestellt ist, die innerhalb eines Armaturgehäuses (nicht dargestellt) angeordnet ist. Die Klappe 1 ist drehbar um eine Achse 2 angeordnet. Die Klappe 1 ist um einen Symmetriepunkt 3 im Wesentlichen kreisförmig ausgebildet. Am Rand 4 weist die Klappe 1 eine Dicke D auf. Die Dicke D ist in der Figur 1 perspektivisch nicht darstellbar. Die Dicke der Klappe 1 nimmt zum Symmetriepunkt 3 hin zu, so dass im Symmetriepunkt 3 die Dicke D₂ größer ist als die Dicke D am Rand 4. Die Klappe 1 weist eine kreisförmige Aussparung 5 um den Symmetriepunkt 3 auf. In diese kreisförmige Aussparung 5 ist eine Vorklappe 6 angeordnet, die relativ zur Klappe 1 bewegbar ausgebildet ist.

Die Vorklappe 6 ist um eine zweite Achse 7 drehbar angeordnet, wobei die zweite Achse 7 mittig durch die Vorklappe 6 geht. Die Achse 2 fällt mit der zweiten Achse 7 zusammen. Die Vorklappe 6 ist im Wesentlichen kreisförmig ausgebildet und am Rand beidseitig derart ausgebildet, dass eine schräge Kante 8 entsteht. Diese schräge Kante 8 weist einen Winkel zwischen 30° und 70° relativ zur Vorklappenoberfläche 9 auf. Die in Figur 1 dargestellte Anordnung der Klappe 1 und der Vorklappe 6 zeigt eine geöffnete Stellung der Vorklappe 6. Die Stellung der Klappe 1 gegenüber einem Armaturgehäuse ist nicht dargestellt.

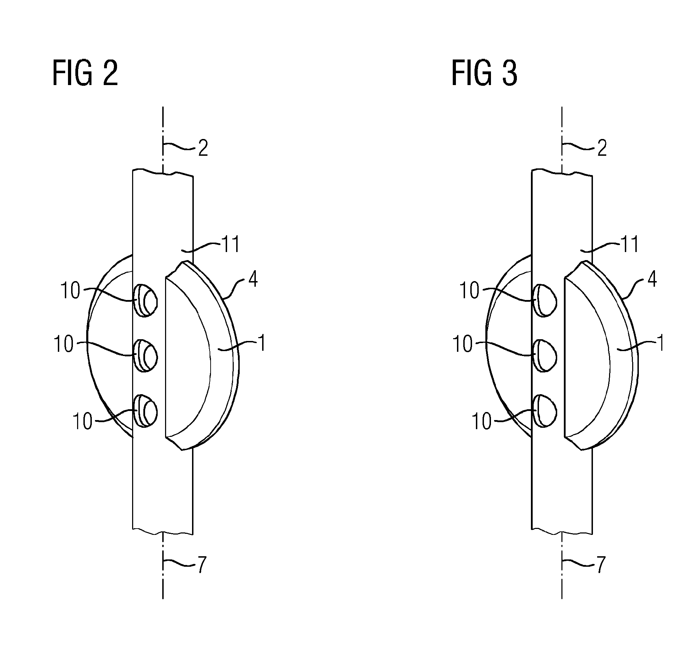

Die Figur 2 zeigt eine Armatur, wobei die Vorklappe 6 drei Teilklappen 10 umfasst, die miteinander drehbar angeordnet sind. In einer alternativen Ausführungsform sind die drei Teilklappen 10 derart ausgebildet, dass sie miteinander in Richtung der zweiten Achse 7 angeordnet und in Richtung der zweiten Achse verschiebbar ausgebildet sind. Die Teilklappen 10 sind ebenso kreisförmig ausgebildet und in kreisförmigen Löchern angeordnet. Durch Drehen der Teilklappen 10 verschließt sich die Durchblicköffnung durch die Vorklappe 6. Das Schließen erfolgt durch einen Antrieb (nicht dargestellt). Dieser Antrieb kann für die Klappe 1 und für die Vorklappe 6 ausgebildet sein. In einer alternativen Ausführungsform können zwei Antriebe eingesetzt werden. Ein Antrieb für die Klappe 1 und ein Antrieb für die Vorklappe 6. Diese Ausführungsform ist in den Figuren 1 bis 3 nicht dargestellt.

Die Figur 2 zeigt die Klappe 1 in einem leicht angedrosselten Zustand. Das bedeutet, dass die Teilklappen 10 bereits eine leichte Drehung um die zweite Achse 7 durchgeführt haben, so dass durch die Öffnung nicht der gesamte Querschnitt zur Verfügung steht.

Die Figur 3 zeigt die Klappe 1 in einem komplett geschlossenen Zustand. Das bedeutet, dass die Teilklappen 10 derart gedreht sind, dass sie die Öffnung vollständig versperren.

Die Teilklappen 10 können gemeinsam oder separat voneinander bewegt werden.

Die Vorklappe 6 ist innerhalb eines Rohres angeordnet. Das Armaturgehäuse ist im Wesentlichen kreisförmig ausgebildet (nicht dargestellt).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Armatur umfassend
eine Klappe (1),
die drehbar um eine Achse (2) angeordnet ist,
ein Armaturgehäuse, in dem die Klappe (1) angeordnet ist, **dadurch gekennzeichnet, dass**
die Klappe (1) eine Vorklappe (6) aufweist, die relativ zur Klappe (1) bewegbar ausgebildet ist.

2. Armatur nach Anspruch 1,
wobei die Klappe (1) im Wesentlichen kreisförmig ausgebildet ist.

3. Armatur nach Anspruch 1 oder 2,
wobei die Vorklappe (6) um eine zweite Achse (7) drehbar angeordnet ist,
wobei die zweite Achse (7) mittig durch die Vorklappe (6) geht.

4. Armatur nach einem der vorhergehenden Ansprüche,
wobei die Achse (2) mit der zweiten Achse (7) zusammenfällt.

5. Armatur nach einem der vorhergehenden Ansprüche,
wobei die Vorklappe (6) im Wesentlichen kreisförmig ausgebildet ist.

6. Armatur nach einem der vorhergehenden Ansprüche,
wobei die Vorklappe (6) drei Teilklappen (10) umfasst, die miteinander drehbar angeordnet sind.

7. Armatur nach einem der Ansprüche 1 bis 5,
wobei die Vorklappe (6) drei Teilklappen (10) umfasst, die miteinander in Richtung der zweiten Achse (7) verschiebbar angeordnet sind.

8. Armatur nach einem der vorhergehenden Ansprüche,
wobei die Vorklappe (6) innerhalb eines Rohres (11) in der Klappe (1) angeordnet ist.

9. Armatur nach einem der vorhergehenden Ansprüche,
wobei das Armaturgehäuse im Wesentlichen kreisförmig ausgebildet ist.

10. Armatur nach einem der vorhergehenden Ansprüche,
wobei die Dicke der Klappe (1) im Wesentlichen so groß ist wie die Breite der Vorklappe (1).
